# EUROPÄISCHE PATENTANMELDUNG

(11) **EP 1 818 564 A2**
(43) Veröffentlichungstag der Anmeldung: **15.08.2007**
(21) Anmeldenummer: 07002583.8
(22) Anmeldetag: 07.02.2007
(51) Int. Cl.: F16F 9/32

(54) **Verfahren zum Verschweißen eines Bodens mit einem Zylinder eines Schwingungsdämpfers**

(30) Priorität: 11.02.2006 DE 102006006400
(71) Anmelder: ZF FRIEDRICHSHAFEN AG, 88046 Friedrichshafen (DE)
(72) Erfinder: Ofner, Joachim, 97539 Wonfurt (DE)

(57) **Zusammenfassung**

Verfahren zum elektrischen Widerstandsverschweißen eines Bodens mit einem endseitig offenen Zylinder eines Schwingungsdämpfers, wobei der Boden mit einem Mittelfrequenzschweißverfahren mit dem Zylinder verschweißt wird.

## Beschreibung

Die Erfindung betrifft ein Verfahren zum Verschweißen eines Bodens mit einem Zylinder eines Schwingungsdämpfers gemäß dem Oberbegriff von Patentanspruch 1.

Aus der DE 92 03 542 U1 ist ein Schwingungsdämpfer bekannt, dessen Zylinder einen Boden mit einem Schweißspritzschutz aufweist. Als Schweißspritzschutz dient ein O-Ring in einer umlaufenden Nut des Bodens. Der zur Zylinderinnenwandung vorgespannte O-Ring verhindert das Eindringen von Schweißspritzern in den Zylinder. Schweißspritzer könnten z. B. einen Kolbenring am Kolben beschädigen oder als kleine Partikel Dämpfventile im Schwingungsdämpfer verstopfen.

Der O-Ring übernimmt zusätzlich die Funktion der Zentrierung des Bodens zum Zylinder, wodurch sichergestellt ist, dass zwischen dem Boden und dem Zylinder kein Nebenschluss vorliegt. Prinzipiell könnte man auf einen Spritzschutz verzichten, wenn man beispielsweise zwischen dem Boden und dem Zylinder eine mehrfach gestufte Kontur vorsehen würde, so dass eine Labyrinth-Dichtstelle vorliegt. Man müsste die Schweißvorrichtung dann noch mit einer sehr präzisen Teilehalterung ausstatten, damit zwischen dem Boden und dem Zylinder kein Nebenschluss vorliegt. Damit wäre jedoch der Zwang zu sehr präzise hergestellten Bauteilen verbunden.

Aufgabe der vorliegenden Erfindung ist es, ein Verfahren zum Einschweißen eines Bodens in einen Schwingungsdämpfer zu realisieren, bei dem das Eindringen von Schweißspritzern in den Schwingungsdämpfer verhindert wird.

Erfindungsgemäß wird die Aufgabe dadurch gelöst, dass der Boden mit einem Mittelfrequenzschweißverfahren mit dem Zylinder verschweißt wird.

Versuche haben ergeben, dass mit dem Mittelfrequenzschweißen zuverlässig die Spritzerbildung verhindert werden kann. Man kann deutlich geringere Schweißströme wählen und dabei die Schweißzeit verlängern. Dadurch wird der negative Schweißspritzeffekt überwunden.

In weiterer Ausgestaltung der Erfindung wird der Boden mit einem servo-elektrischen Antrieb auf den Zylinder vorgespannt. Der Boden wird beim Anschmelzen der Kontaktfläche zum Zylinder nachgeführt, so dass keine Fehlstellen auftreten können oder eine Nacharbeit notwendig ist.

Dabei wird die Vorspannung des Bodens auf den Zylinder konstant gehalten. Man kann eine vergleichsweise kleine Vorspannung wählen und damit auch dünnwandige Zylinder und/oder Böden miteinander verschweißen, ohne dass es zu Verformungen kommt.

Vorteilhafterweise ist dem Verschweißen des Bodens mit dem Zylinder ein Messimpuls vorgeschaltet. Dieser Verfahrensschritt lässt erkennen, ob zwischen dem Zylinder und dem Boden ein elektrischer Nebenschluss vorliegt, der u. U. die Schweißqualität beeinträchtigen könnte.

Im Hinblick auf möglichst geringe Schweißströme weist der Boden in Richtung einer Stirnfläche des Zylinders eine konische Kontaktfläche auf.

Der Boden darf während des Montageablaufs keinesfalls auf dem Zylinder desachsiert werden. Deshalb weist der Boden einen Führungsabschnitt auf, der in den Zylinderinnendurchmesser eingreift.

Anhand der folgenden Figurenbeschreibung soll die Erfindung näher erläutert werden.

Es zeigt:
- Fig. 1: Vereinfachte Darstellung des Schweißverfahrens
- Fig. 2: Zeit-Stromkennlinie der Schweißvorrichtung
- Fig. 3 - 5: Zylinder mit verschiedenen Bodenvarianten

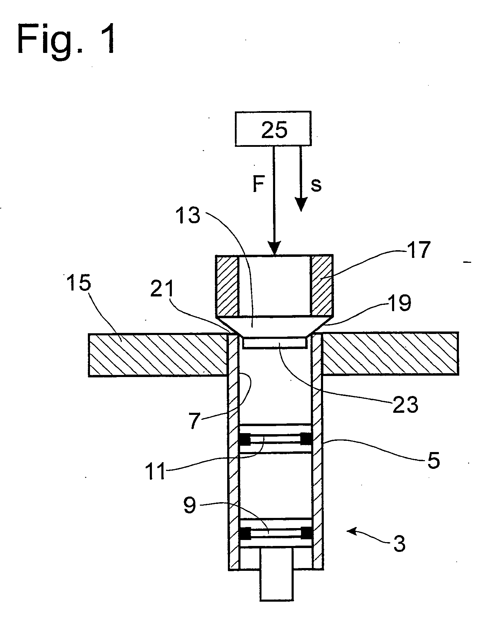

Die Figur 1 zeigt eine Vorrichtung 1, in der ein Schwingungsdämpfer 3 über seinen Zylinder 5 fixiert ist. Die Zylinderinnenwandung 7 dient als Gleitfläche für einen Kolben 9 und ggf. für einen Trennkolben 11, so dass die Zylinderinnenwandung 7 absolut sauber sein muss. Auf dem endseitig offenen Zylinder 5 wird ein Boden 13 mittels eines Mittelfrequenzschweißverfahrens befestigt. Dazu werden am Zylinder 5 und am Boden 13 Schweißelektroden 15; 17 angelegt. Der Boden verfügt über eine konische Kontaktfläche 19 zu einer Stirnfläche 21 des Zylinders 5, so dass im Idealfall nur eine Linienberührung zwischen den beiden Bauteilen 5; 13 vorliegt. Ein zylindrischer Führungsabschnitt 23 verhindert während des Montageablaufs, dass der Boden 13 auf dem Zylinder 5 desachsiert wird.

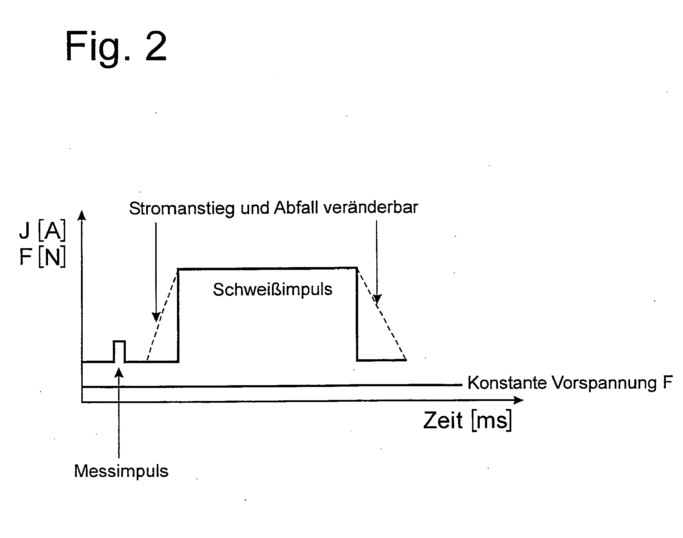

Vor dem eigentlichen Schweißimpuls kann man noch einen Messimpuls voransetzen. Anhand des Messimpulses kann man feststellen, ob ein elektrischer Nebenschluss vorliegt und ob dieser eine Eingröße aufweist, der die Schweißqualität negativ beeinflusst. Der Schweißimpuls folgt vereinfacht, wie die Fig. 2 zeigt, einer Rechteckfunktion, wobei die Zeit t und der Strom I variabel sind, im Gegensatz zu einer Kondensator-Entladungsschweißvorrichtung. Man kann den Stromanstieg und den Stromabfall regeln, wodurch ebenfalls die Schweißspritzergefahr gemindert wird.

Mit dem Schweißimpuls wird der Kontaktbereich zwischen dem Boden 13 und dem Zylinder 5 angeschmolzen. Ein servo-elektrischer Stellantrieb 25 hält die Vorspannung auf den Boden 13 trotz des Nachsetzens aufgrund des Anschmelzens geregelt aufrecht. Dazu können die Vorspannkraft und der Vorspannweg in eine Regelung des Stellantriebs 25 einfließen. Die Vorspannkraft kann mit dem servo-elektrischen Stellantrieb konstant gehalten werden.

Mit dem Mittelfrequenzschweißverfahren ist sichergestellt, dass einerseits keine Schweißspritzer in den Zylinder 5 eindringen und andererseits eine absolute Dichtheit des Zylinders 5 gewährleistet werden kann.

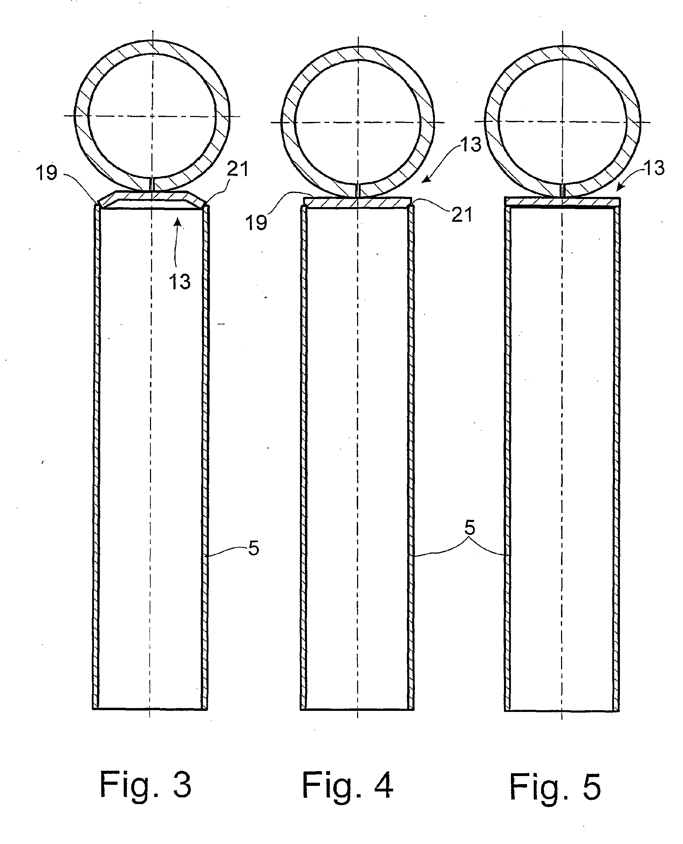

Die Figuren 3 bis 5 zeigen den Zylinder 5 mit verschiedenen Böden 13. In der Fig. 3 ist der Boden zumindest auf einem Teilbereich konisch ausgeführt, so dass die Kontaktfläche 19 in einem Winkel zur Stirnfläche 21 des Zylinders 3 verläuft.

Mit der Fig. 4 soll gezeigt werden, dass man bei dem Boden ggf. auf den Führungsabschnitt 23 auch verzichten kann. Die Fig. 5 stellt die einfachste Form eines Bodens 13 dar, der durch nicht gezeigte Vorrichtungsmittel zum Zylinder 3 zentriert werden muss.

## Patentansprüche

1. Verfahren zum elektrischen Widerstandsverschweißen eines Bodens (13) mit einem endseitig offenen Zylinder (5) eines Schwingungsdämpfers (3),
**dadurch gekennzeichnet,**
**dass** der Boden (13) mit einem Mittelfrequenzschweißverfahren mit dem Zylinder (5) verschweißt wird.

2. Verfahren nach Anspruch 1,
**dadurch gekennzeichnet,**
**dass** der Boden (13) mit einem servo-elektrischen Antrieb (25) auf den Zylinder (3) vorgespannt wird.

3. Verfahren nach Anspruch,
**dadurch gekennzeichnet,**
**dass** die Vorspannung des Bodens auf den Zylinder konstant gehalten wird.

4. Verfahren nach Anspruch 1,
**dadurch gekennzeichnet,**
**dass** dem Verschweißen des Bodens mit dem Zylinder ein Messimpuls vorgeschaltet ist.

5. Schwingungsdämpfer nach einem Verfahren nach Anspruch 1,
**dadurch gekennzeichnet,**
**dass** der Boden (13) in Richtung einer Stirnfläche (21) des Zylinders (5) eine konische Kontaktfläche (19) aufweist.

6. Schwingungsdämpfer nach Anspruch 1,
**dadurch gekennzeichnet,**
**dass** der Boden (13) einen Führungsabschnitt (23) aufweist, der in den Zylinderinnendurchmesser eingreift.
